# EUROPEAN PATENT APPLICATION

(11) **EP 4 814 835 A1**
(43) Date of publication of application: **30.09.2026**
(21) Application number: 25165541.1
(22) Date of filing: 24.03.2025
(51) Int. Cl.: G06Q 10/087, G06Q 50/04, G06Q 50/08

(54) **METHOD FOR CONCRETE ELEMENT PREFABRICATION**

(71) Applicant: Elematic Oyj, 37801 Akaa (FI)
(72) Inventor: VOUTILAINEN, Teppo, 37801 Akaa (FI)
(74) Representative: Berggren Oy

(57) **Abstract**

The invention relates to a method for concrete element prefabrication in a prefabrication facility (1), in which method concrete elements are manufactured with casting machinery (3a-3c) comprising wear and/or spare parts, wherein the prefabrication facility comprises a storage (4) for storing wear and/or spare parts for the machinery, and wherein usage information of the casting machinery (3a-3c) is collected and procurement of the wear and/or spare parts is controlled based on the collected usage information.

## Description

### Technical field

The present invention relates to concrete element prefabrication. More precisely the invention relates to controlling wear and spare parts orders and storage in a concrete element prefabrication facility.

### Background

The machinery used in prefabrication of concrete elements comprise various spare and wear parts. For uninterrupted prefabrication at the prefabrication facility these spare and wear parts needs to be readily available when needed. Further, it is also important to identify and determine the correct moment for replacement of the spare or wear part as accurately as possible, since replacement too early leads to increased production costs and replacement too late leads to decreased quality of the concrete elements prefabricated as well as to production interruptions. Thus, if sufficient amount of spare and wear parts are not readily available when needed, production may need to be stopped, possibly for a long time period before the required spare or wear part can be obtained and delivered to the prefabrication facility. On the other hand, maintaining a large storage of the required spare and wear parts at the prefabrication facility requires space and capital.

### Summary

The present invention provides a method for procurement of wear and/or spare parts for the casting machinery of a prefabrication facility of concrete elements, which allows minimization of production stops and their duration due to required changes of wear and/or spare parts and the space required for storage of the wear and/or spare parts and the prefabrication facility.

In the method of the invention for concrete element prefabrication in a prefabrication facility, in which method concrete elements are manufactured with casting machinery comprising wear and/or spare parts, and wherein the prefabrication facility comprises a storage for storing wear and/or spare parts for the machinery, the usage information of the casting machinery is collected and procurement of the wear and/or spare parts is controlled based on the collected usage information.

Collection of the usage information of the casting machines and machinery allows accurate estimation of the moment when the wear and/or spear parts needs to be changed so that availability of the required replacement wear and/or spare parts can be guaranteed. Further, if the required wear and/or spare parts are not readily available in the storage at proper amounts, the required parts can be ordered sufficiently early so that they are available when the moment to change those parts is at hand. This allows the minimization of production stoppage time when the parts are available when required and not waiting is required. There is also no need to maintain excessively large storage of the wear and/or spare parts at the prefabrication facility.

In an embodiment of the method of the invention the collected usage information of individual machines of the casting machinery comprises operation time, amount and/or area of cast concrete elements, casting speed, and/or rotational speed of a feed screw.

In an embodiment of the method of the invention the moment for changing a wear and/or spare part is defined based on the collected usage information of the casting machinery.

The collected usage data can be used to estimate the moment of replacement either directly or by relations to each other. For example, the relation of casting speed of a slipform casting machine and rotational speed of the feed screw(s) of the machine gives clear indication of the shape and wear status of the feed screw, based on which relation it can be estimated when the fed screw needs to be changed.

In this embodiment the moment for procuring a wear and/or spare part is preferably defined based on the defined moment for changing the wear and/or spare part and estimated delivery time of the wear and/or spare part to the prefabrication facility. This allows timely ordering of the needed wear and/or spare parts so that production stoppages due to change of wear and/spare parts can be minimized and there is no need to maintain overly large wear and/or spare parts storage at the production facility for this.

In an embodiment of the method of the invention the method is implemented with an automatic procurement system. In this embodiment the automatic procurement system may be a part of the control system(s) of the prefabrication facility, and/or the automatic procurement system may be operated via suitable network, such as internet, and/or the required data for the system may be forwarded via suitable network to the automatic procurement system located elsewhere, for example.

More precisely the features defining a method in accordance with the present invention are presented in claim 1. Dependent claims present advantageous features and embodiments of the invention.

### Brief description of the drawings

Exemplifying embodiment of the invention and its advantages are explained in greater detail below in the sense of example and with reference to accompanying drawing, which

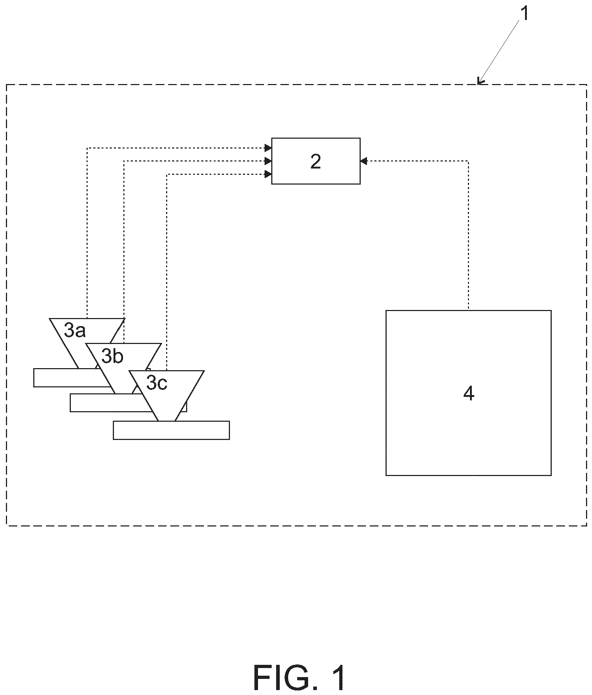

Figure 1 shows schematically an embodiment of an arrangement in accordance with the present invention.

### Detailed description of an embodiment

Figure 1 shows an arrangement for the method of the invention for a prefabrication facility 1.

The arrangement comprises an automatic procurement system 2, which collects usage data from casting machines 3a-3c. The usage data may comprise operation time of the casting machine, amount and/or area of concrete elements cast with the casting machine, casting speed of the casting machine, and/or rotational speed of each feed screw of the casting machine, for example.

Based on the usage data collected from the casting machines 3a-3c, the automatic procurement system 2 determines the moment, i.e. a point of time, when wear and/or spare part(s) of each of the casting machines needs to changed. This determination can be done by comparing the amount and/or area of the concrete elements cast with each casting machine 3a-3c to a predetermined reference value, or by defining ratio between the casting speed of the casting machine to the rotational speed of the feed screw(s) and comparing this to a predefined ratio, for example.

The automatic procurement system 2 also receives inventory information from a storage 4 of the prefabrication facility 1 of the amounts of wear and/or spare parts in the storage.

After determining the points of time for the wear and/or spare part changes of the casting machines 3a-3c, the automatic procurement system 2 compares the amount of wear and/or spare parts needed to be changes during a predefined period of time. If all the required parts are not available at the storage 4, the automatic procurement system 2 proceeds to send orders for the required parts, or alerts for the need of the order of additional parts. The predefined period of time is defined taking into account the delivery time of each required wear and/or spare part.

Typical wear and/or spare parts required for maintaining production of the concrete element prefabrication facility 1 comprise feed screws, hollow-core sleeves, mass guides wearing plates of a smoothing beam, wear plates, strand guides and dowel bars, for example.

It is also to be noted, that the type of the concrete mass used in the casting affects the wearing of the wear and/or spare parts and is thus taken into consideration when determining the predetermined reference values.

The specific exemplifying embodiment of the invention shown in the figure and discussed above should not be construed as limiting. A person skilled in the art can amend and modify the embodiment within the scope of the attached claims. Thus, the invention is not limited merely to the embodiment described above.

## Claims

1. Method for concrete element prefabrication in a prefabrication facility (1), in which method concrete elements are manufactured with casting machinery (3a-3c) comprising wear and/or spare parts, and wherein the prefabrication facility comprises a storage (4) for storing wear and/or spare parts for the machinery, **characterized in that** usage information of the casting machinery (3a-3c) is collected and procurement of the wear and/or spare parts is controlled based on the collected usage information.

2. Method of claim 1, wherein the collected usage information of individual machines (3a-3c) of the casting machinery comprises operation time, amount and/or area of cast concrete elements, casting speed, and/or rotational speed of a feed screw.

3. Method of claim 1 or 2, wherein the moment for changing a wear and/or spare part is defined based on the collected usage information of the casting machinery (3a-3c).

4. Method of claim 3, wherein the moment for procuring a wear and/or spare part is defined based on the defined moment for changing the wear and/or spare part and estimated delivery time of the wear and/or spare part to the prefabrication facility (1).

5. Method of any of the preceding claims, wherein the method is implemented with an automatic procurement system (2).
